# EUROPEAN PATENT SPECIFICATION

(11) **EP 4 429 254 B1**
(45) Date of publication and mention of the grant of the patent: **04.11.2026**
(21) Application number: 22900338.9
(22) Date of filing: 23.11.2022
(51) Int. Cl.: G11B 27/031, G11B 27/34, H04N 21/431

(54) **VIDEO PROCESSING METHOD, VIDEO PROCESSING APPARATUS, AND COMPUTER-READABLE STORAGE MEDIUM**
VIDEOVERARBEITUNGSVERFAHREN, VIDEOVERARBEITUNGSVORRICHTUNG UND COMPUTERLESBARES SPEICHERMEDIUM
PROCÉDÉ DE TRAITEMENT VIDÉO, APPAREIL DE TRAITEMENT VIDÉO ET SUPPORT DE STOCKAGE LISIBLE PAR ORDINATEUR

(30) Priority: 30.11.2021 CN 202111447610
(43) Date of publication of application: 11.09.2024
(73) Proprietor: BEIJING BYTEDANCE NETWORK TECHNOLOGY CO., LTD., Beijing 100041 (CN)
(72) Inventor: ZHANG, Yixiang, Beijing 100086 (CN)
(74) Representative: Marks & Clerk LLP
(86) International application number: PCT/CN2022/133689
(87) International publication number: WO 2023/098533

(56) References cited:
- CN-A- 104 378 692
- CN-A- 111 898 388
- CN-A- 114 143 592
- CN-A- 114 143 593
- US-A1- 2016 147 745
- US-A1- 2016 378 748
- US-A1- 2019 104 259

## Description

### CROSS-REFERENCE TO RELATED APPLICATIONS

### TECHNICAL FIELD

The present disclosure relates to the field of computer technologies, and in particular, to a video processing method, a video processing apparatus, and a computer-readable storage medium.

### BACKGROUND

A social network can, according to an input of a user, provide various services, such as photo or video sharing, messaging, etc., to facilitate social interaction between users.

With the interaction with the social network, the user can upload digital media to a system for browsing by others. The digital media can include image, video, audio, text, and the like. For example, the user can post a self-created video onto the social network. The other users on the social network can interact with the video creator by means of browsing, likes, comments, and the like.

With the user's increasing dependence on the social network, the user has higher and higher requirements for experience of the social network, especially for quality of caption translation in the video.

The published patent application CN111898388 A, BEIJING BYTEDANCE NETWORK TECHNOLOGY CO., LTD., 6 November 2020, discloses a method for video processing comprising editing a translation of an original caption in the video.

### SUMMARY

The invention is set out solely in the appended claims. Embodiments according to the invention are solely the specific combinations of features as defined in the claims. There is provided a video processing method, comprising:
providing a translator with a video to be translated, and providing, in-feed in the video, the translator with an interactive interface for translating an original caption in the video, on which a translation of the original caption is comprised;
entering a proofreading page in response to an edit request of the translator for the translation;
receiving a caption translation returned by the translator from the proofreading page; and
displaying, in the video, a caption translation passing assessment.

There is provided a video processing apparatus, comprising: a processor configured to
provide a translator with a video to be translated, and provide, in-feed in the video, the translator with an interactive interface for translating an original caption in the video, on which a translation of the original caption is comprised;
enter a proofreading page in response to an edit request of the translator for the translation; and
receive a caption translation returned by the translator from the proofreading page; and
a display configured to display, in the video, a caption translation passing assessment.

There is provided a video processing apparatus, comprising:
a memory; and
a processor coupled to the memory, the processor being configured to perform, based on instructions stored in the memory, one or more steps of the video processing method of any of the embodiments described in the present disclosure.

There is provided a computer-readable storage medium having thereon stored a computer program which, when executed by a processor, performs one or more steps of the video processing method of any of the embodiments described in the present disclosure.

The "SUMMARY" is provided to introduce concepts in a simplified form, which will be described in detail below in the following "DETAILED DESCRIPTION OF THE DRAWINGS". The "SUMMARY" is not intended to identify key features or essential features of the claimed technical solutions, nor is it intended to limit the scope of the claimed technical solutions.

Other features, aspects, and advantages of the present disclosure will become apparent from the following detailed description of exemplary embodiments thereof, which is made with reference to the accompanying drawings.

### BRIEF DESCRIPTION OF THE DRAWINGS

Preferred embodiments of the present disclosure are described below with reference to the accompanying drawings. The accompanying drawings described herein are used for providing a further understanding of the present disclosure. The accompanying drawings, together with the following specific description, are incorporated in and form a part of this specification, and serve to explain the present disclosure. It should be understood that the drawings in the following description relate to only some embodiments of the disclosure and do not constitute limitations on the present disclosure. In the drawings:
Fig. 1 illustrates a flow diagram of a video processing method according to some embodiments of the present disclosure;
Figs. 2A to 2C illustrate schematic diagrams of interactive interfaces for translating an original caption in a video according to some embodiments of the present disclosure;
Fig. 2D illustrates a schematic diagram of guiding registration as a community translator according to some embodiments of the present disclosure;
Figs. 3A to 3B illustrate schematic diagrams of proofreading pages according to some embodiments of the present disclosure;
Fig. 3C illustrates a schematic diagram of a translation management interface according to other embodiments of the present disclosure;
Fig. 3D illustrates a schematic diagram of a proofreading page according to other embodiments of the present disclosure;
Fig. 3E illustrates a schematic diagram of a translation management interface according to still other embodiments of the present disclosure;
Fig. 4A illustrates a schematic diagram of a caption translation viewing page according to some embodiments of the present disclosure;
Fig. 4B illustrates a schematic diagram of a translator information page according to some embodiments of the present disclosure;
Fig. 5A illustrates a schematic diagram of a video playing page according to some embodiments of the present disclosure;
Fig. 5B illustrates a schematic diagram of a caption language management page according to some embodiments of the present disclosure;
Fig. 5C illustrates a schematic diagram of a caption translation viewing page according to other embodiments of the present disclosure;
Fig. 6A illustrates a schematic diagram of a video playing page according to other embodiments of the present disclosure;
Fig. 6B illustrates a schematic diagram of with the translator an interactive interface for interaction with a viewer according to some embodiments of the present disclosure;
Fig. 7 illustrates a block diagram of a video processing apparatus according to some embodiments of the present disclosure;
Fig. 8 illustrates a block diagram of a video processing apparatus according to other embodiments of the present disclosure;
Fig. 9 illustrates a block diagram of an electronic device according to some embodiments of the present disclosure.

It should be understood that sizes of various components shown in the drawings are not necessarily drawn to actual scale for ease of description. Identical or similar reference numbers are used in the drawings to refer to identical or similar components. Therefore, once a certain item is defined in one drawing, it may not be further discussed in subsequent drawings.

### DETAILED DESCRIPTION OF THE DRAWINGS

The technical solutions in the embodiments of the present disclosure will be described clearly and completely in conjunction with the drawings in the embodiments of the present disclosure, but it is obvious that the embodiments described are only some of the embodiments of the present disclosure, not all of the embodiments. The following description of the embodiments is merely illustrative in nature and is in no way intended to limit this disclosure, its application, or uses. It should be understood that the present disclosure can be implemented in various forms and should not be construed as limited to the embodiments set forth herein.

A term "comprise" and variations thereof used in this disclosure are intended to be open-minded terms that comprise at least the following elements/features, but do not exclude other elements/features, i.e., "comprising but not limited to". Furthermore, a term "include" and variations thereof used in this disclosure are intended to be open-minded terms that include at least the following elements/features, but do not exclude other elements/features, i.e., "including but not limited to". Therefore, "comprise" is synonymous with "include". A term "based on" means "based at least in part on".

Throughout this specification, termed "one embodiment", "some embodiments", or "an embodiment" means that a specific feature, structure, or characteristic described in conjunction with the embodiments is comprised in at least one embodiment of the present invention. For example, the term "one embodiment" means "at least one embodiment"; the term "another embodiment" means "at least one other embodiment"; the term "some embodiments" means "at least some embodiments". Moreover, the phrases "in one embodiment", "in some embodiments", or "in an embodiment" appearing in various places throughout this specification do not necessarily all refer to a same embodiment, but they can also refer to the same embodiment.

It should be noted that notions of "first", "second", and the like, mentioned in the present disclosure, are only used for distinguishing different devices, modules or units, and are not used for limiting the order or interdependence of functions performed by the devices, modules or units. Unless otherwise specified, the notions of "first", "second", and the like, are not intended to imply that objects so described must be in a given order in time, space, rank, or any other way.

It should be noted that modifiers of "one" or "more" mentioned in this disclosure are intended to be illustrative rather than restrictive, and that those skilled in the art should appreciate that they should be understood as "one or more" unless otherwise clearly indicated in the context.

Names of messages or information exchanged between devices in the embodiments of the present disclosure are for illustrative purposes only, and are not intended to limit the scope of the messages or information.

It should be understood that in the present disclosure, there is also no limitation on how an image or video to be applied/processed is obtained. In one embodiment of the present disclosure, the image or video can be acquired from a storage device, such as an internal memory or an external storage device, and in another embodiment of the present disclosure, the image or video can be taken by a camera assembly. It should be noted that in the context of this specification, a type of the image or video is not specifically limited. Furthermore, the image or video can be a source image or video obtained by a camera device, or an image or video that is obtained by particularly processing the source image or video, such as preliminary filtering, antialiasing, color adjustment, contrast adjustment, normalization, and the like. It should be noted that the preprocessing operation can also comprise other types of preprocessing operations known in the art, which will not be described in detail herein.

With the user's increasing dependence on a social network, the user has higher and higher requirements for experience of the social network, especially for quality of caption translation in the video. In the related art, only a video poster can edit and post caption information of the video. To further improve the quality of the caption translation in the video, the caption translation in the video is provided using crowd-sourcing translation.

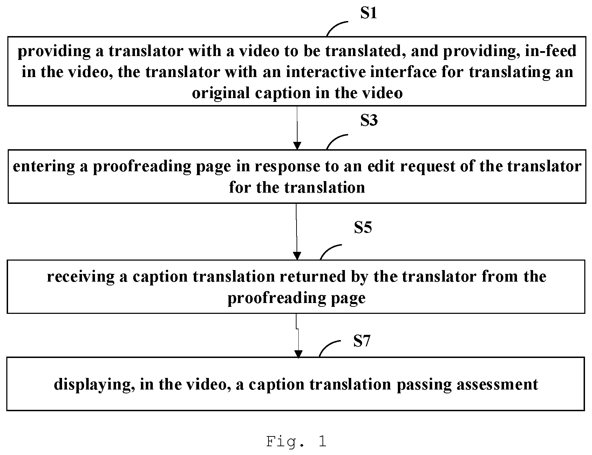

Fig. 1 illustrates a flow diagram of a video processing method according to some embodiments of the present disclosure.

As shown in Fig. 1, the video processing method comprises: step S1, providing a translator with a video to be translated, and providing, in-feed in the video, the translator with an interactive interface for translating an original caption in the video, on which a translation of the original caption is comprised; step S3, entering a proofreading page in response to an edit request of the translator for the translation; step S5, receiving a caption translation returned by the translator from the proofreading page; and step S7, displaying, in the video, a caption translation passing assessment.

In the step S1, the translator can be provided with the video to be translated according to at least one of a type of videos in which the translator is interested, or a language used by the translator on the social network.

In some embodiments, expected interest values of a user for different types of videos can be determined according to history behavior data of the user; the type of the videos in which the user is interested is determined according to the expected interest values of the user for the different types of videos; and the translator is provided with a video to be translated of a type matching the type of the videos in which the translator is interested. Providing the translator with videos of his/her favorite type can improve the translation enthusiasm of the translator, and is also beneficial to improving the quality of the translation and reducing the cost of translation assessment.

The language used by the translator can comprise at least one of: a system language used by the translator, a video language browsed by the translator, or a language inputted by the translator. For example, if in the system language used by the translator, the video language browsed by the translator, and the language inputted by the translator, English and Chinese are comprised, the translator can be provided with a video to be translated for which an original caption of the video is English or Chinese and desired to be translated into Chinese or English. Providing the translator with the video to be translated for which the languages of the original caption and translation match his/her used languages can more effectively improve the quality of the translation and the efficiency of the translation assessment.

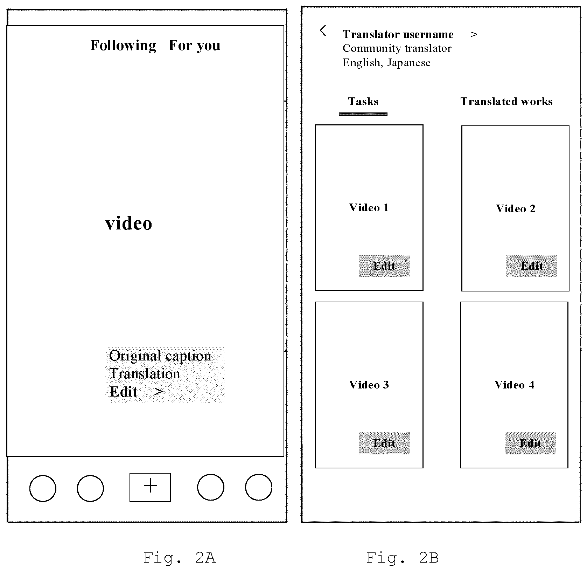

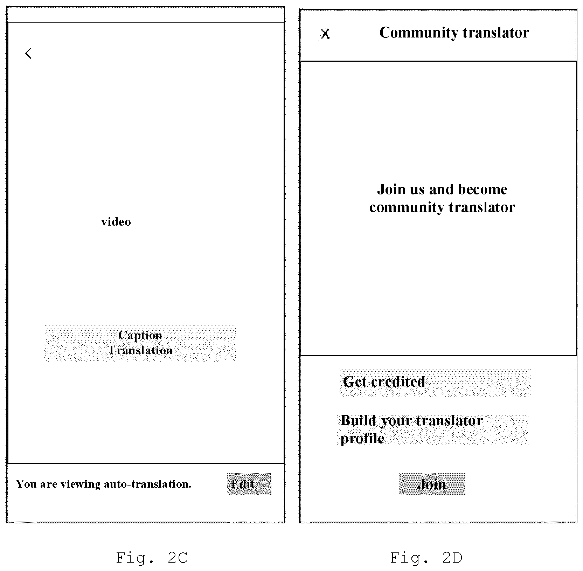

The step S1 will be further described below in conjunction with Figs. 2A to 2D. Figs. 2A to 2C illustrate schematic diagrams of interactive interfaces for translating an original caption in a video according to some embodiments of the present disclosure. Fig. 2D illustrates a schematic diagram of guiding registration as a community translator according to some embodiments of the present disclosure.

Fig. 2A illustrates a video playing page and corresponding captions comprising an original caption and translation. Fig. 2A also illustrates an Edit option for the caption translation. The interactive interface comprising the Edit option is not provided to other users than the translator. The translator clicks on the Edit option and can enter a proofreading page. In some embodiments, for a community translator, the Edit option is always displayed; and for a non-community translator, if the translator does not click on the Edit option, it is displayed only a specified number of times, for example, 5 times.

The translator can also enter the interactive interface for translating the original caption in the video through a translation management interface. In some embodiments, the providing the translator with an interactive interface for translating the original caption in the video comprises: providing the translator with the translation management interface, the translation management interface having thereon displayed a thumbnail of the video to be translated, on which an option of editing the translation is provided.

Fig. 2B illustrates a schematic diagram of a translation management interface according to some embodiments of the present disclosure. Fig. 2B illustrates an identity of the translator, for example, whether he belongs to a community translator, a language he is good at. As shown in Fig. 2B, in a "Tasks" bar, there are displayed thumbnails (for example, video covers) of a plurality of videos to be translated, on which the option of editing the translation is provided, respectively. If the translator clicks on the Edit option, the proofreading page can be entered.

Of course, the translator can also click on the thumbnail of the video to be translated to enter a preview page. In other embodiments, the providing the translator with an interactive interface for translating the original caption in the video comprises: in response to a preview request of the translator for the video to be translated, entering the preview page, on which the video is played and the translation of the caption is displayed, and the option of editing the translation is provided.

Fig. 2C illustrates a schematic diagram of a preview page according to some embodiments of the present disclosure. As shown in Fig. 2C, on the preview page, there are displayed the playing page of the video and the corresponding caption translation, and can also be displayed the original caption. At a bottom of the preview page, there is a tip that the translator is viewing the translation, for example, an automatically translated machine translation, and the Editing option is provided. If the translator clicks on the Edit option, the proofreading page can be entered.

The translator can be an already registered community translator, or can be an unregistered translator. For the unregistered translator, the translator can also be provided with guidance on registration as the community translator. If he becomes the community translator, he can get corresponding certification. In some embodiments, the providing, in the video, the translator with an interactive interface for translating an original caption in the video further comprises providing the translator with the guidance on registration as the community translator, as shown in Fig. 2D.

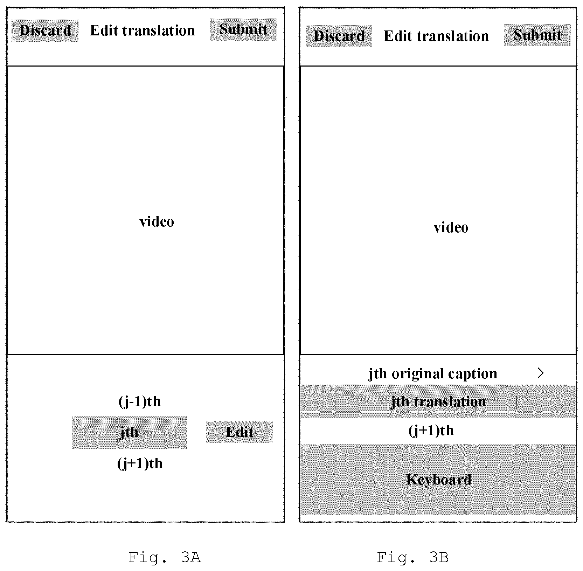

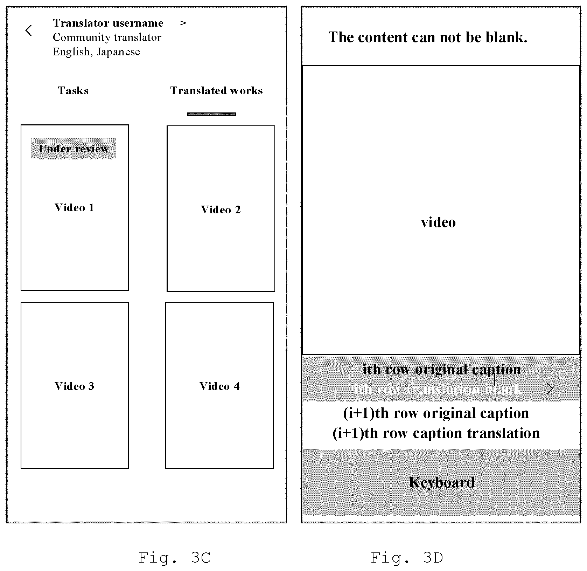

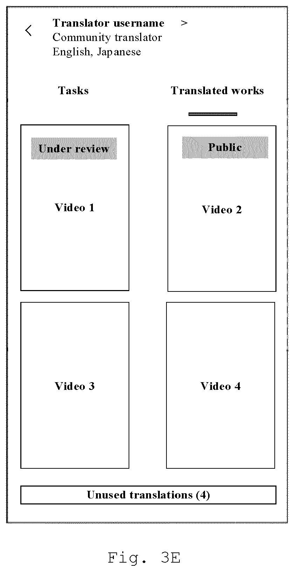

The step S3 will be further described below in conjunction with Figs. 3A to 3D. Figs. 3A to 3B illustrate schematic diagrams of proofreading pages according to some embodiments of the present disclosure. Fig. 3C illustrates a schematic diagram of a translation management interface according to other embodiments of the present disclosure. Fig. 3D illustrates a schematic diagram of a proofreading page according to other embodiments of the present disclosure. Fig. 3E illustrates a schematic diagram of a translation management interface according to still other embodiments of the present disclosure.

In the step S3, the proofreading page is entered in response to the edit request of the translator for the translation. After the translator enters the proofreading page, playing the video can be stopped, and an interface for editing the translation is provided. For example, after the translator enters the proofreading page, translations of a plurality of captions are displayed, and the caption translations are highlighted one by one. In Fig. 3A, on the proofreading page, there are displayed original captions one by one (for example, sentence by sentence), and below each original caption, there is displayed a translation, an edit location being positioned at a caption translation selected by the translator. The translation can be a machine translation or a caption translation provided by another translator.

In some embodiments, the video is played in synchronization with the caption in response to a playing request of the translator for the video. For example, the video can be played synchronously in a manner that a speech is consistent with the caption according to timestamps of the speech and the caption. The translator can scroll the caption translation, and the playing of the video can be continued. Of course, the translator can also choose to pause the playing of the video. In other embodiments, a corresponding speech is played in response to the translator clicking on a designated area of the original caption. The designated area of the original caption can comprise an original area and a corresponding icon area following the original.

Fig. 3B illustrates an edit interface after the translator is positioned on editing a jth caption translation shown in Fig. 3A. As shown in Fig. 3B, the edit interface can comprise a pop-up keyboard. The translator can clear the translation and input his/her own caption translation. In a process of editing the translation, the translator can click on a playing button of the video at any time to play the video. The translator can also click on the original caption area to play only the corresponding speech without playing the video.

As shown in Fig. 3B, the translator can click on a "Discard" button to discard already edited content; and if he has not yet edited content, he can go back to the preview page directly. When the translator has had the edited content, a "Submit" button can be clicked. When the translator clicks on the "Submit" button, a dialog box can also pop up to provide an option of whether another translation task is initiated after the caption translation is submitted. If this option is selected, a next translation task is entered directly. If the option is not selected, the translator's translation management interface can be entered.

If the caption translation is successfully submitted, there is a message to prompt that the translation has been submitted. The submitted translation will be displayed in a tab of a "Translation works" bar in the translation management interface of the translator and tagged as "under review".

Fig. 3C illustrates a schematic diagram of a translation management interface according to other embodiments of the present disclosure. Similar to Fig. 2B, Fig. 3C also illustrates the identity of the translator, for example, whether he belongs to a community translator, a language he is good at. As shown in Fig. 3C, in "Translation works", there are displayed a plurality of thumbnails (for example, video covers) of translation works completed by the translator, and on the thumbnail of the video to be translated, there is displayed a current status of the caption translation, for example, "under review".

If the caption translation is not successfully submitted, for example, part of the caption translation has been already cleared, but corresponding caption translation has not been inputted by the translator yet, that is, if at least one row of blank is present in the text, there is a message to prompt the translator that any row cannot be left blank, and the translator is guided for positioning at a 1st blank row for editing, as shown in Fig. 3D.

The caption translation of the translator is submitted to a platform, and after it passes assessment, a notification of the platform will be received. That is, the video processing method further comprises: sending a notification to the translator after the caption translation of the translator passes assessment. Of course, the translator can also enter the corresponding task management interface to view the status of the caption translation, which is, for example, under review, already posted, and not passing assessment (unused translation),etc., as shown in Fig. 3E.

For an unused translation, considering the huge extra workload of server-side storage of the unused translation, the unused translation can also be not displayed, but a list will still be kept and an initial translation will be displayed.

For example, for one same video X, a translation of a translator A is not used, and a translation of a translator B is used. The video X will appear in an "Unused translations" list of the translator A, where only an initial translation, rather than the translation of the translator B, is displayed. The video X will appear in the "Translation works" tab of the translator B, where the translation of the translator B is displayed.

In some embodiments, for the translation management interface, when the translator A begins editing the video X, the video X is deleted from a "Tasks"-bar list of other translators. For a special case, when the "Tasks"-bar list of the translator B is not refreshed in time and the translator also plans to edit the video X, the translator B will be prompted and provided with an option of shifting to a translation task page of another available video. In this way, an unnecessary task conflict can be avoided, and the overall efficiency of the crowdsourcing translation is improved.

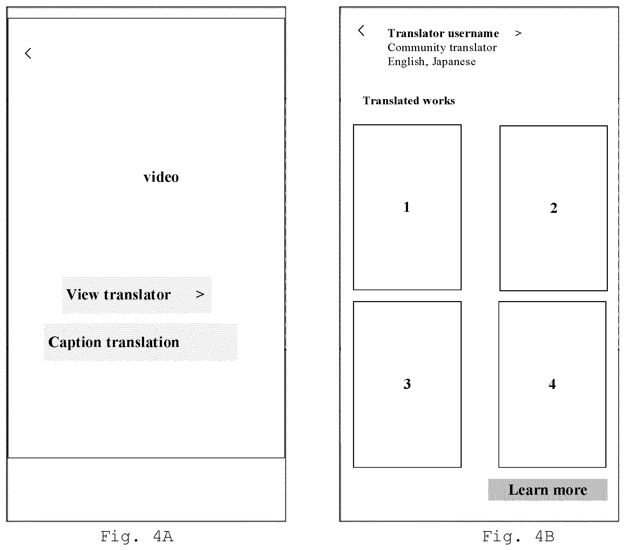

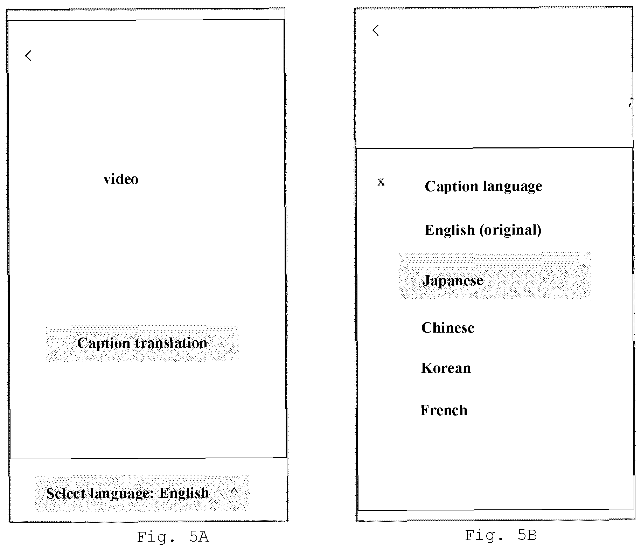

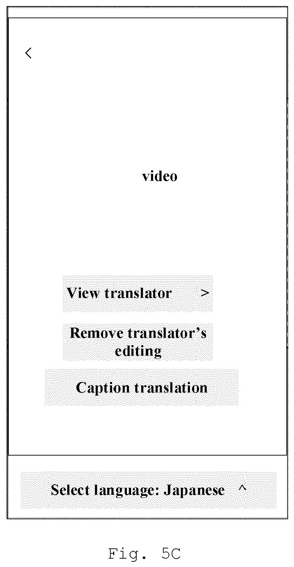

The step S5 will be described below in conjunction with Figs. 4A to 5C. Fig. 4A illustrates a schematic diagram of a caption translation viewing page according to some embodiments of the present disclosure. Fig. 4B illustrates a schematic diagram of a translator information page according to some embodiments of the present disclosure. Fig. 5A illustrates a schematic diagram of a video playing page according to some embodiments of the present disclosure. Fig. 5B illustrates a schematic diagram of a caption language management page according to some embodiments of the present disclosure. Fig. 5C illustrates a schematic diagram of a caption translation viewing page according to other embodiments of the present disclosure.

In the step S5, the caption translation returned by the translator from the interactive page is received and reviewed. In some embodiments, the creator of the video can also be notified that he/she has had a caption translation passing assessment. The creator of the video can view the caption translation according to a path provided by the notification, such as the caption translation viewing page shown in Fig. 4A. The creator of the video can also enter the translator information page to view and know relevant information of the translator by clicking on the "View translator" button shown in Fig. 4A, as shown in Fig. 4B.

The creator of the video can also jump to the video playing page by clicking on the video, as shown in Fig. 5A. In Fig. 5A, on the video playing page, there is displayed the original caption by default, but is provided a language option. After clicking the language option, the caption language management page is entered, as shown in Fig. 5B. In Fig. 5B, a language of the original caption is presented, as well as languages of various versions of caption translations. The creator of the video can select a caption translation in a corresponding language and view a corresponding caption translation, as shown in Fig. 5C. Similar to Fig. 4A, Fig. 5C illustrates the caption translation, and displays the "View translator" button. As described above, the creator of the video can also click on the "View translator" button shown in Fig. 5C, and enter the translator information page to view and know the relevant information of the translator, as shown in Fig. 4B. The creator of the video can also remove the caption translation of the translator through a "Remove translator's editing" button shown in Fig. 5C. A caption translation adopted by the creator of the video will be posted.

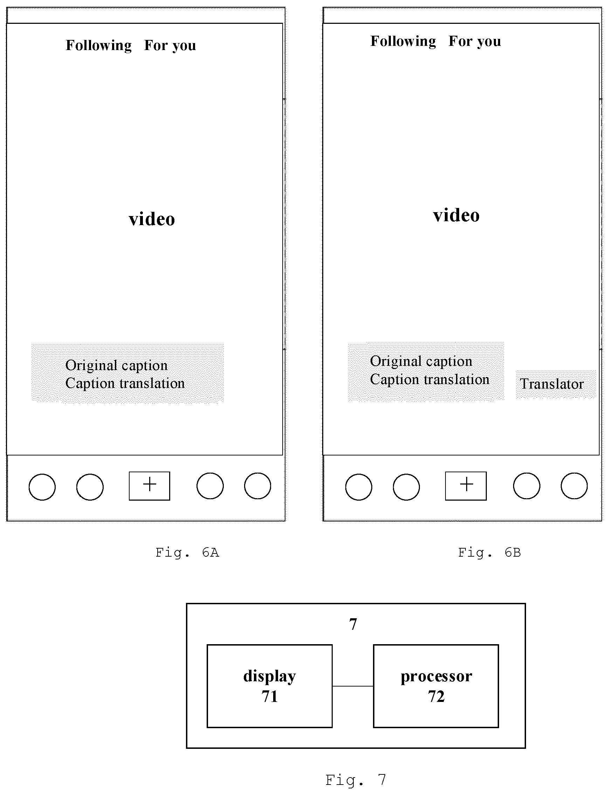

The step S7 will be described below in conjunction with Figs. 6A to 6B. Fig. 6A illustrates a schematic diagram of a video playing page according to other embodiments of the present disclosure. Fig. 6B illustrates a schematic diagram of with the translator an interactive interface for interaction with a viewer according to some embodiments of the present disclosure.

In the step S7, the caption translation passing assessment is displayed in the video. As shown in Fig. 6A, the original caption of the video and the posted caption translation are synchronized with the speech of the video.

In some embodiments, the video processing method further comprises: providing, in the video, the interactive interface for the translator's interaction with the viewer, as shown in Fig. 6B. In Fig. 6B, in the video, there is displayed the caption translation passing assessment, and is displayed a signature of the translator corresponding to the caption translation, for example, a username of the translator. The viewer can perform interaction such as likes, etc., for the translator shown in Fig. 6B.

In the above embodiments, a complete solution is provided for the crowdsourcing translation of the video, and particularly, a more convenient and efficient translation interactive interface is provided for the translator. In addition, through the crowdsourcing translation of the embodiments of the present disclosure, the quality of the translation and the efficiency of translation assessment can be effectively improved.

Fig. 7 illustrates a block diagram of a video processing apparatus according to some embodiments of the present disclosure. As shown in Fig. 7, a video processing apparatus 7 comprises a processor 71 and a display 72.

The processor 71 is configured to: provide a translator with a video to be translated, and provide, in-feed in the video, the translator with an interactive interface for translating an original caption in the video, on which a translation of the original caption is comprised; enter a proofreading page in response to an edit request of the translator for the translation; and receive the caption translation returned by the translator from the interactive page. For example, the processor 71 is configured to perform the steps S1 to S5.

The display 72 is configured to display, in the video, a caption translation passing assessment, for example, perform the step S7.

Furthermore, although not shown, the apparatus can also comprise a memory that can have thereon stored various information generated in operations by the video processing apparatus and the units included in the video processing apparatus, programs and data for the operations, and the like. The memory can be a volatile memory and/or non-volatile memory. For example, the memory can comprise, but is not limited to, a random access memory (RAM), dynamic random access memory (DRAM), static random access memory (SRAM), read-only memory (ROM), flash memory. Of course, the memory can also be located outside the video processing apparatus.

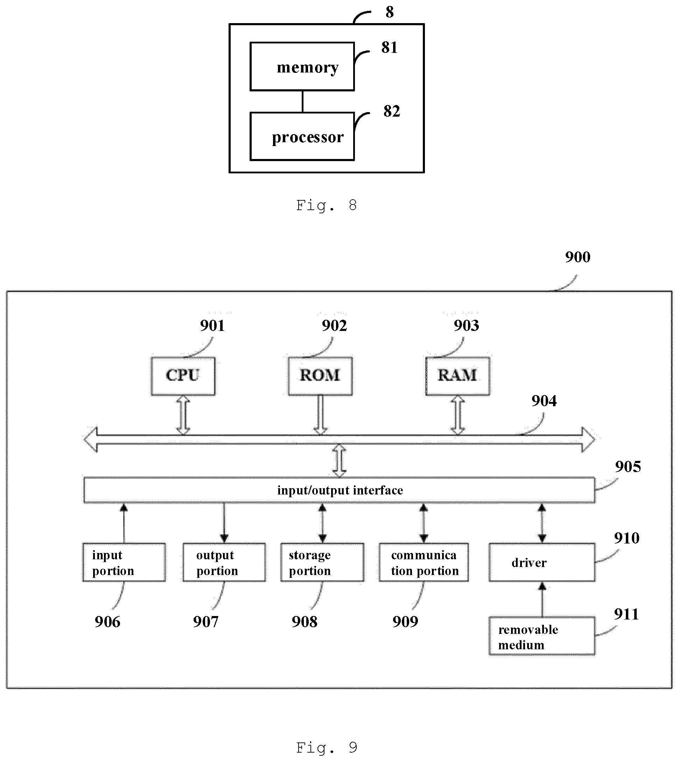

Fig. 8 illustrates a block diagram of a video processing apparatus according to other embodiments of the present disclosure.

In some embodiments, a video processing apparatus 8 can be various types of devices, which can comprise, for example, but are not limited to, mobile terminals such as a mobile phone, a notebook computer, a digital broadcast receiver, a PDA (Personal Digital Assistant), a PAD (Tablet Personal Computer), a PMP (Portable Multimedia Player), a vehicle-mounted terminal (for example, a vehicle-mounted navigation terminal), and the like, and fixed terminals such as a digital TV, a desktop computer, and the like.

As shown in Fig. 8, the video processing apparatus 8 comprises: a memory 81 and a processor 82 coupled to the memory 81. It should be noted that the components of the video processing apparatus 8 shown in Fig. 8 are only exemplary and not restrictive, and the video processing apparatus 8 can also have other components according to practical application needs. The processor 82 can control the other components in the video processing apparatus 8 to perform a desired function.

In some embodiments, the memory 81 is configured to store one or more computer-readable instructions. The processor 82 is configured to execute computer-readable instructions which, when executed by the processor 82, implement the method according to any of the embodiments described above. For specific implementations of steps of the method and related explanations, reference can be made to the above embodiments, which are not repeated herein.

For example, the processor 82 and the memory 81 can be in direct or indirect communication with each other. For example, the processor 82 and the memory 81 can communicate over a network. The network can comprise a wireless network, a wired network, and/or any combination of wireless and wired networks. The processor 82 and the memory 81 can also communicate with each other through a system bus, which is not limited in the present disclosure.

For example, the processor 82 can be embodied as various suitable processors, processing devices, and the like, such as a central processing unit (CPU), graphics processing unit (GPU), network processor (NP), and the like; and can also be a digital signal processor (DSP), application specific integrated circuit (ASIC), field programmable gate array (FPGA) or other programmable logic device, discrete gate or transistor logic, discrete hardware component. The central processing unit (CPU) can be an X86 or ARM architecture, etc. For example, the memory 81 can comprise any combination of various forms of computer-readable storage media, such as a volatile memory and/or non-volatile memory. The memory 81 can comprise, for example, a system memory that has thereon stored, for example, an operating system, application program, boot loader, database, and other program. Various application programs and various data and the like can also be stored in the storage medium.

In addition, according to some embodiments of the present disclosure, in the case where various operations/processing according to the present disclosure are implemented by software and/or firmware, a program constituting the software can be installed from the storage medium or network to a computer system having a dedicated hardware structure, for example, a computer system of an electronic device 900 shown in Fig. 9, which when the various programs are installed, is capable of performing various functions comprising functions such as those described above and the like.

In Fig. 9, a central processing unit (CPU) 901 performs various processing according to a program stored in a read-only memory (ROM) 902 or a program loaded from a storage portion 908 to a random access memory (RAM) 903. In the RAM 903, data needed when the CPU 901 performs various processing and the like is also stored as needed. The central processing unit is merely exemplary, which can also be other types of processors such as the various processors described above. The ROM 902, RAM 903, and storage portion 908 can be various forms of computer-readable storage media, as described below. It should be noted that although the ROM 902, RAM 903, and storage portion 908 are shown separately in Fig. 9, one or more of them can be combined or located in a same memory or storage module, or different memories or storage modules.

The CPU 901, ROM 902, and RAM 903 are connected to each other via a bus 904. An input/output interface 905 is also connected to the bus 904.

The following components are connected to the input/output interface 905: an input portion 906 such as a touch screen, a touch pad, a keyboard, a mouse, an image sensor, a microphone, an accelerometer, a gyroscope, and the like; an output portion 907, comprising a display such as a cathode ray tube (CRT), a liquid crystal display (LCD), a speaker, a vibrator, and the like; the storage portion 908, comprising a hard disk, a magnetic tape, and the like; and a communication portion 909, comprising a network interface card such as a LAN card, a modem, and the like. The communication portion 909 allows communication processing to be performed via a network such as the Internet. It is readily appreciated that while the various devices or modules in the electronic device 900 shown in Fig. 9 communicate via the bus 904, they can also communicate through a network or other manners, wherein the network can comprise a wireless network, a wired network, and/or any combination of wireless and wired networks.

A driver 910 is also connected to the input/output interface 905 as needed. A removable medium 911 such as a magnetic disk, an optical disk, a magneto-optical disk, a semiconductor memory, or the like is mounted on the drive 910 as needed, so that a computer program read out therefrom is installed in the storage portion 908 as needed.

In the case where the series of processing described above is implemented by software, a program constituting the software can be installed from a network such as the Internet or a storage medium such as the removable medium 911.

According to an embodiment of the present disclosure, a process described above with reference to a flow diagram can be implemented as a computer software program. For example, in the embodiment of the present disclosure, a computer program product is comprised, which comprises a computer program carried on a computer-readable medium, the computer program comprising program code for performing the method illustrated by the flow diagram. In such an embodiment, the computer program can be downloaded and installed from a network through the communication device 909, or installed from the storage portion 908, or installed from the ROM 902. The computer program, when executed by the CPU 901, performs the above functions defined in the method of the embodiment of the present disclosure.

It should be noted that, in the context of this disclosure, a computer-readable medium can be any tangible medium that can have thereon contained or stored a program for use by or in conjunction with an instruction execution system, apparatus, or device. The computer-readable medium can be a computer-readable signal medium or a computer-readable storage medium or any combination of the two. The computer-readable storage medium can be, for example, but is not limited to: an electronic, magnetic, optical, electromagnetic, infrared, or semiconductor system, apparatus, or device, or any combination of the above. More specific examples of the computer-readable storage medium can comprise, but are not limited to: an electrical connection having one or more wires, a portable computer diskette, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination of the above. In the present disclosure, the computer-readable storage medium can be any tangible medium that can have thereon contained or stored a program for use by or in conjunction with an instruction execution system, apparatus, or device. However, in the present disclosure, the computer-readable signal medium can comprise a data signal propagated in baseband or as part of a carrier wave, in which computer-readable program code is carried. Such a propagated data signal can take any of a variety of forms, comprising but not limited to, an electromagnetic signal, an optical signal, or any suitable combination of the above. The computer-readable signal medium can also be any computer-readable medium other than the computer-readable storage medium, which can send, propagate, or transmit a program for use by or in conjunction with an instruction execution system, apparatus, or device. Program code comprised on the computer-readable medium can be transmitted using any suitable medium, comprising but not limited to: a wire, optical cable, RF (radio frequency), etc., or any suitable combination of the above.

The above computer-readable medium can be comprised in the electronic device; or can be separate without being assembled into the electronic device.

In some embodiments, there is also provided a computer program, comprising: instructions which, when executed by a processor, cause the processor to perform the method of any of the embodiments described above. For example, the instructions can be embodied as computer program code.

In an embodiment of the present disclosure, computer program code for performing operations of the present disclosure can be written in one or more programming languages or any combination thereof, wherein the programming language comprises but is not limited to an object-oriented programming language such as Java, Smalltalk, C++, and also comprises a conventional procedural programming language, such as a **"C"** programming language or similar programming language. The program code can be executed entirely on a user's computer, partly on the user's computer, as a stand-alone software package, partly on the user's computer and partly on a remote computer or entirely on the remote computer or server. In the scenario where the remote computer is involved, the remote computer can be connected to the user's computer through any type of network, which comprises a local area network (LAN) or a wide area network (WAN), or can be connected to an external computer (for example, through the Internet using an Internet service provider).

Flow diagrams and block diagrams in the drawings illustrate the possible architecture, functions, and operations of systems, methods and computer program products according to various embodiments of the present disclosure. In this regard, each block in the flow diagrams or block diagrams can represent one module, program segment, or portion of code, which comprises one or more executable instructions for implementing a specified logic function. It should also be noted that, in some alternative implementations, functions noted in the blocks can occur in a different order from the order noted in the drawings. For example, two blocks shown in succession can, in fact, be executed substantially in parallel, or the blocks can sometimes be executed in a reverse order, which depends upon functions involved. It will also be noted that each block of the block diagrams and/or flow diagrams, and a combination of blocks in the block diagrams and/or flow diagrams, can be implemented by a special-purpose hardware-based system that performs the specified function or operation, or a combination of special-purpose hardware and computer instructions.

A module, component or unit involved in the description of the embodiment of the present disclosure can be implemented by software or hardware. A name of the module, component, or unit does not in some cases constitute a limitation on the module, component, or unit itself.

The functions described herein above can be performed, at least in part, by one or more hardware logic components. For example, without limitation, an exemplary hardware logic component that can be used comprises: a field programmable gate array (FPGA), application specific integrated circuit (ASIC), application specific standard product (ASSP), system on chip (SOC), complex programmable logic device (CPLD), and the like.

In the description provided herein, numerous specific details are set forth. However, it is understood that the embodiments of this invention can be practiced without these specific details. In other cases, well-known methods, structures and techniques have not been presented in detail in order not to obscure an understanding of this description.

Furthermore, while operations are depicted in a specific order, this should not be understood as requiring that such operations be performed in the specific order shown or in a sequential order. Under certain circumstances, multitasking and parallel processing can be advantageous. Similarly, while several specific implementation details are comprised in the above discussion, these should not be construed as limitations on the scope of the present disclosure.

## Claims

1. A video processing method, comprising:
providing a translator with a video to be translated, and providing, in-feed in the video, the translator with an interactive interface for translating an original caption in the video, on which a translation of the original caption and an Edit option for the translation are comprised, wherein:
for the translator being a community translator, the Edit option is always displayed, wherein the community translator is a registered translator; and
for the translator being a non-community translator, the Edit option is displayed only a specified number of times if the translator does not click on the Edit option;
entering a proofreading page in response to an edit request of the translator for the translation, wherein the edit request consists in the translator clicking on the Edit option;
receiving a caption translation returned by the translator from the proofreading page; and
displaying, in the video, the caption translation returned by the translator and a passing assessment of the caption translation indicating that the caption translation has passed a quality assessment.

2. The video processing method according to claim 1, wherein after the translator enters the proofreading page, a playing of the video is stopped, and an interface for editing the translation is provided.

3. The video processing method according to claim 2, wherein in response to the translator clicking on a designated area of the original caption, a corresponding speech is played.

4. The video processing method according to claim 2, wherein the video is played in synchronization with the caption in response to a playing request of the translator for the video.

5. The video processing method according to claim 1 or claim 2, wherein the providing a translator with a video to be translated, and providing, in-feed in the video, the translator with an interactive interface for translating an original caption in the video comprises:
providing the translator with a translation management interface, the translation management interface having thereon displayed a thumbnail of the video to be translated, on which an option of editing the translation is provided.

6. The video processing method according to claim 5, wherein the providing a translator with a video to be translated, and providing, in-feed in the video, the translator with an interactive interface for translating an original caption in the video comprises:
in response to a preview request of the translator for the video to be translated, entering a preview page, on which the video is played and the translation of the caption is displayed, and the option of editing the translation is provided.

7. The video processing method according to any of claims 2-6, wherein after the translator enters the proofreading page, translations of a plurality of captions are displayed, and the translations of the captions are highlighted one by one,
optionally, in response to the translator clicking on any location of the translation, a corresponding location of the video is positioned and the interface for editing the translation is provided.

8. The video processing method according to any of claims 1-4, wherein translations of a plurality of captions are displayed, and original captions and translations thereof are synchronously highlighted one by one corresponding to progress of the video.

9. The video processing method according to any of claims 1-8, wherein the translator is provided with the video to be translated according to at least one of a type of videos in which the translator is interested, or a language used by the translator on a social network.

10. The video processing method according to any of claims 1-9, wherein the displaying, in the video, a caption translation which has passed quality assessment comprises:
displaying, in the video, a signature of the translator corresponding to the caption translation.

11. The video processing method according to any of claims 1-10, further comprising:
sending a notification to the translator after the caption translation of the translator passes assessment; and/or
providing, in the video, with the translator an interactive interface for interaction with a viewer.

12. A video processing apparatus, comprising:
a processor configured to:
provide a translator with a video to be translated, and provide, in-feed in the video, the translator with an interactive interface for translating an original caption in the video, on which a translation of the original caption and an Edit option for the translation are comprised, wherein:
for the translator being a community translator, the Edit option is always displayed, wherein the community translator is a registered translator; and
for the translator being a non-community translator, the Edit option is displayed only a specified number of times if the translator does not click on the Edit option;
enter a proofreading page in response to an edit request of the translator for the translation, wherein the edit request consists in the translator clicking on the Edit option; and
receive a caption translation returned by the translator from the proofreading page; and
a display configured to display, in the video, the caption translation returned by the translator and a passing assessment of the caption translation indicating that the caption translation has passed a quality assessment.

13. A video processing apparatus, comprising:
a memory; and
a processor coupled to the memory, the processor being configured to perform, based on instructions stored in the memory, the steps of the video processing method according to any of claims 1-11.

14. A computer-readable storage medium having thereon stored a computer program comprising instructions which, when the program is executed by a computer, cause the computer to carry out the video processing method according to any of claims 1-11.

## Patentansprüche

1. Videoverarbeitungsverfahren, umfassend:
Bereitstellen eines zu übersetzenden Videos an einen Übersetzer und Bereitstellen einer interaktiven Benutzeroberfläche, um einen Original-Untertitel in dem Video zu übersetzen, innerhalb des Videos für den Übersetzer, die eine Übersetzung des Original-Untertitels und eine Bearbeitungsoption für die Übersetzung umfasst, wobei:
wenn der Übersetzer ein Mitgliedsübersetzer ist, die Bearbeitungsoption immer angezeigt wird, wobei der Mitgliedsübersetzer ein registrierter Übersetzer ist; und
wenn der Übersetzer ein Nicht-Mitgliedsübersetzer ist, die Bearbeitungsoption nur für eine bestimmte Anzahl von Malen angezeigt wird, wenn der Übersetzer nicht auf die Bearbeitungsoption klickt;
Aufrufen einer Korrekturleseseite als Reaktion auf eine Bearbeitungsanfrage des Übersetzers für die Übersetzung, wobei die Bearbeitungsanfrage darin besteht, dass der Übersetzer auf die Bearbeitungsoption klickt;
Empfangen einer vom Übersetzer zurückgegebenen Untertitelübersetzung von der Korrekturleseseite; und
Anzeigen, in dem Video, der vom Übersetzer zurückgegebenen Untertitelübersetzung und einer positiven Bewertung der Untertitelübersetzung, die darauf hinweist, dass die Untertitelübersetzung eine Qualitätsbewertung bestanden hat.

2. Videoverarbeitungsverfahren nach Anspruch 1, wobei, nachdem der Übersetzer die Korrekturleseseite aufgerufen hat, eine Wiedergabe des Videos gestoppt wird und eine Oberfläche zum Bearbeiten der Übersetzung bereitgestellt wird.

3. Videoverarbeitungsverfahren nach Anspruch 2, wobei als Reaktion darauf, dass der Übersetzer auf einen vorgesehenen Bereich der Originaluntertitel klickt, eine entsprechende Sprache abgespielt wird.

4. Videoverarbeitungsverfahren nach Anspruch 2, wobei das Video synchron mit dem Untertitel als Reaktion darauf abgespielt wird, dass eine Wiedergabeanfrage des Übersetzers für das Video abgespielt wird.

5. Videoverarbeitungsverfahren nach Anspruch 1 oder Anspruch 2, wobei das Bereitstellen eines zu übersetzenden Videos an einen Übersetzer und Bereitstellen einer interaktiven Benutzeroberfläche, um einen Original-Untertitel in dem Video zu übersetzen, innerhalb des Videos für den Übersetzer, Folgendes umfasst:
Bereitstellen einer Übersetzungsverwaltungsoberfläche an den Übersetzer, wobei die Übersetzungsverwaltungsoberfläche eine Miniaturansicht des zu übersetzenden Videos darauf angezeigt, auf der eine Möglichkeit zum Bearbeiten der Übersetzung bereitgestellt wird.

6. Videoverarbeitungsverfahren nach Anspruch 5, wobei das Bereitstellen eines zu übersetzenden Videos an einen Übersetzer und Bereitstellen einer interaktiven Benutzeroberfläche, um einen Original-Untertitel in dem Video zu übersetzen, innerhalb des Videos für den Übersetzer, Folgendes umfasst:
als Reaktion auf eine Vorschauanfrage des Übersetzers für das zu übersetzende Video, Aufrufen einer Vorschauseite, auf der das Video abgespielt und die Übersetzung des Untertitels angezeigt wird, und die Möglichkeit zum Bearbeiten der Übersetzung bereitgestellt wird.

7. Videoverarbeitungsverfahren nach einem der Ansprüche 2-6, wobei, nachdem der Übersetzer die Korrekturleseseite aufgerufen hat, Übersetzungen mehrerer Untertitel angezeigt werden und die Übersetzungen der Untertiteln nacheinander hervorgehoben werden,
optional, als Reaktion darauf, dass der Übersetzer auf eine beliebige Stelle der Übersetzung klickt, eine entsprechende Stelle im Video positioniert und die Benutzeroberfläche zum Bearbeiten der Übersetzung bereitgestellt wird.

8. Videoverarbeitungsverfahren nach einem der Ansprüche 1-4, wobei Übersetzungen mehrerer Untertitel angezeigt werden und Original-Untertitel und deren Übersetzungen synchron nacheinander entsprechend einem Fortschritt des Videos hervorgehoben werden.

9. Videoverarbeitungsverfahren nach einem der Ansprüche 1-8, wobei dem Übersetzer das zu übersetzende Video gemäß mindestens einem einer Art von Videos, an denen der Übersetzer interessiert ist, oder einer Sprache, die der Übersetzer in einem sozialen Netzwerk verwendet, bereitgestellt wird.

10. Videoverarbeitungsverfahren nach einem der Ansprüche 1-9, wobei das Anzeigen, in dem Video, einer Untertitelübersetzung, die eine Qualitätsbewertung bestanden hat, Folgendes umfasst:
Anzeigen, in dem Video, einer Signatur des Übersetzers, entsprechend der Untertitelübersetzung.

11. Videoverarbeitungsverfahren nach einem der Ansprüche 1-10, das weiter Folgendes umfasst:
Senden einer Benachrichtigung an den Übersetzer, nachdem die Untertitelübersetzung des Übersetzers eine Bewertung bestanden hat; und/oder
Bereitstellen, in dem Video, einer interaktiven Oberfläche zur Interaktion mit einem Zuschauer an den Übersetzer.

12. Videoverarbeitungseinrichtung, die Folgendes umfasst:
einen Prozessor, der konfiguriert ist zum:
Bereitstellen eines zu übersetzenden Videos an einen Übersetzer und Bereitstellen einer interaktiven Benutzeroberfläche, um einen Original-Untertitel in dem Video zu übersetzen, innerhalb des Videos für den Übersetzer, die eine Übersetzung des Original-Untertitels und eine Bearbeitungsoption für die Übersetzung umfasst, wobei:
wenn der Übersetzer ein Mitgliedsübersetzer ist, die Bearbeitungsoption immer angezeigt wird, wobei der Mitgliedsübersetzer ein registrierter Übersetzer ist; und
wenn der Übersetzer ein Nicht-Mitgliedsübersetzer ist, die Bearbeitungsoption nur für eine bestimmte Anzahl von Malen angezeigt wird, wenn der Übersetzer nicht auf die Bearbeitungsoption klickt;
Aufrufen einer Korrekturleseseite als Reaktion auf eine Bearbeitungsanfrage des Übersetzers für die Übersetzung, wobei die Bearbeitungsanfrage darin besteht, dass der Übersetzer auf die Bearbeitungsoption klickt; und
Empfangen einer vom Übersetzer zurückgegebenen Untertitelübersetzung von der Korrekturleseseite; und
eine Anzeige, die konfiguriert ist zum Anzeigen, in dem Video, der vom Übersetzer zurückgegebenen Untertitelübersetzung und einer positiven Bewertung der Untertitelübersetzung, die darauf hinweist, dass die Untertitelübersetzung eine Qualitätsbewertung bestanden hat.

13. Videoverarbeitungseinrichtung, die Folgendes umfasst:
einen Speicher; und
einen Prozessor, der mit dem Speicher gekoppelt ist, wobei der Prozessor dazu konfiguriert ist, basierend auf in dem Speicher gespeicherten Anweisungen, die Schritte des Videoverarbeitungsverfahrens nach einem der Ansprüche 1-11 durchzuführen.

14. Computerlesbares Speichermedium, das ein Computerprogramm darauf gespeichert aufweist, das Anweisungen umfasst, die, wenn das Programm von einem Computer ausgeführt wird, den Computer veranlassen, das Videoverarbeitungsverfahren nach einem der Ansprüche 1-11 durchzuführen.

## Revendications

1. Procédé de traitement vidéo, comprenant :
la fourniture, à un traducteur, d'une vidéo à traduire et la fourniture, au traducteur, d'une interface interactive, intégrée à la vidéo, pour traduire une légende originale dans la vidéo, sur laquelle une traduction de la légende originale et une option Modifier (Edit) pour la traduction sont comprises, dans lequel :
pour un traducteur qui est un traducteur de communauté, l'option Modifier est toujours affichée, dans lequel le traducteur de communauté est un traducteur enregistré ; et
pour un traducteur qui est un traducteur de non-communauté, l'option Modifier n'est affichée qu'un nombre spécifié de fois si le traducteur ne clique pas sur l'option Modifier ;
l'accès à une page de relecture en réponse à une demande de modification de la traduction par le traducteur, dans lequel la demande de modification consiste en ce que le traducteur clique sur l'option Modifier ;
la réception d'une traduction de légende renvoyée par le traducteur à partir de la page de relecture ; et
l'affichage, dans la vidéo, de la traduction de légende renvoyée par le traducteur et d'une évaluation positive de la traduction de légende, indiquant que la traduction de légende a passé avec succès une évaluation de qualité.

2. Procédé de traitement vidéo selon la revendication 1, dans lequel, après que le traducteur a accédé à la page de relecture, la lecture de la vidéo est arrêtée et une interface de modification de la traduction est fournie.

3. Procédé de traitement vidéo selon la revendication 2, dans lequel, en réponse au fait que le traducteur clique sur une zone désignée de la légende originale, un discours correspondant est lu.

4. Procédé de traitement vidéo selon la revendication 2, dans lequel la vidéo est lue en synchronisation avec la légende en réponse à une demande de lecture de la vidéo par le traducteur.

5. Procédé de traitement vidéo selon la revendication 1 ou la revendication 2, dans lequel la fourniture, à un traducteur, d'une vidéo à traduire et la fourniture, au traducteur, d'une interface interactive, intégrée à la vidéo, pour la traduction d'une légende originale dans la vidéo, comprennent :
la fourniture, au traducteur, d'une interface de gestion de traduction, l'interface de gestion de traduction affichant une vignette de la vidéo à traduire, sur laquelle une option de modification de la traduction est proposée.

6. Procédé de traitement vidéo selon la revendication 5, dans lequel la fourniture, à un traducteur, d'une vidéo à traduire et la fourniture, au traducteur, d'une interface interactive, intégrée à la vidéo, pour traduire une légende originale dans la vidéo, comprennent :
en réponse à une demande de prévisualisation de la vidéo à traduire par le traducteur, l'accès à une page de prévisualisation sur laquelle la vidéo est lue, la traduction de la légende est affichée, et la possibilité de modifier la traduction est proposée.

7. Procédé de traitement vidéo selon l'une quelconque des revendications 2-6, dans lequel, après que le traducteur a accédé à la page de relecture, les traductions d'une pluralité de légendes sont affichées et les traductions des légendes sont mises en évidence l'une après l'autre,
éventuellement, en réponse au fait que le traducteur clique sur un emplacement quelconque de la traduction, un emplacement correspondant dans la vidéo est positionné et l'interface permettant de modifier la traduction est fournie.

8. Procédé de traitement vidéo selon l'une quelconque des revendications 1-4, dans lequel les traductions d'une pluralité de légendes sont affichées, et les légendes originales et leurs traductions sont mises en évidence de manière synchrone l'une après l'autre en fonction de la progression de la vidéo.

9. Procédé de traitement vidéo selon l'une quelconque des revendications 1-8, dans lequel le traducteur reçoit la vidéo à traduire selon au moins l'un parmi un type de vidéos qui intéresse le traducteur et une langue utilisée par le traducteur sur un réseau social.

10. Procédé de traitement vidéo selon l'une quelconque des revendications 1-9, dans lequel l'affichage, dans la vidéo, d'une traduction de légende ayant passé avec succès une évaluation de qualité comprend :
l'affichage, dans la vidéo, d'une signature du traducteur correspondant à la traduction de la légende.

11. Procédé de traitement vidéo selon l'une quelconque des revendications 1-10, comprenant en outre :
l'envoi d'une notification au traducteur une fois que la traduction de la légende par le traducteur a passé l'évaluation avec succès ; et/ou
la fourniture, au traducteur, d'une interface interactive dans la vidéo permettant l'interaction avec un spectateur.

12. Appareil de traitement vidéo, comprenant :
un processeur configuré pour :
fournir, à un traducteur, une vidéo à traduire et fournir, au traducteur, une interface interactive, intégrée à la vidéo, pour traduire une légende originale dans la vidéo, sur laquelle une traduction de la légende originale et une option Modifier (Edit) pour la traduction sont comprises, dans lequel :
pour un traducteur qui est un traducteur de communauté, l'option Modifier est toujours affichée, dans lequel le traducteur de communauté est un traducteur enregistré ; et
pour un traducteur qui un traducteur de non-communauté, l'option Modifier n'est affichée qu'un nombre spécifié de fois si le traducteur ne clique pas sur l'option Modifier ;
accéder à une page de relecture en réponse à une demande de modification de la traduction par le traducteur, dans lequel la demande de modification consiste en ce que le traducteur clique sur l'option Modifier ; et
recevoir une traduction de légende renvoyée par le traducteur à partir de la page de relecture ; et
un dispositif d'affichage configuré pour afficher, dans la vidéo, la traduction de légende renvoyée par le traducteur et une évaluation positive de la traduction de légende, indiquant que la traduction de légende a passé avec succès une évaluation de qualité.

13. Appareil de traitement vidéo, comprenant :
une mémoire ; et
un processeur couplé à la mémoire, le processeur étant configuré pour réaliser, sur la base d'instructions stockées dans la mémoire, les étapes du procédé de traitement vidéo selon l'une quelconque des revendications 1-11.

14. Support de stockage lisible par ordinateur, sur lequel est stocké un programme informatique comprenant des instructions qui, lorsque le programme est exécuté par un processeur, amènent l'ordinateur à réaliser le procédé de traitement vidéo selon l'une quelconque des revendications 1-11.
